# EUROPEAN PATENT APPLICATION

(11) **EP 1 605 615 A2**
(43) Date of publication of application: **14.12.2005**
(21) Application number: 05253450.0
(22) Date of filing: 04.06.2005
(51) Int. Cl.: H04H 1/00

(54) **Method and apparatus for providing a slide show having interactive information in DAB**

(30) Priority: 11.06.2004 KR 2004043071
(71) Applicant: SAMSUNG ELECTRONICS CO., LTD., Suwon-si Gyeonggi-do 442-742 (KR)
(72) Inventor: Youm, Sun-Hee, Suwon-si Gyeonggi-do (KR); Park, Sung-il, Suwon-si Gyeonggi-do (KR); Park, Jeong-hoon, Gwanak-gu Seoul (KR); Park, Ju-hee, Yeongtong-gu, Suwon-si, Gyeonggi-do (KR); Seo, Ju-hee, Yeongtong-gu Suwon-si Gyeonggi-do (KR)
(74) Representative: Davies, Robert Ean

(57) **Abstract**

A method of providing a slide show, the method having the operations: receiving slide show data having interactive data, parsing (S610, S620) the received interactive data and outputting (S640) data regarding a screen display of the slide show based on a result of the parsing, and receiving the data regarding the screen display and displaying (S650) the data regarding the screen display.

## Description

The present invention relates to digital audio broadcasting (DAB), and more particularly, but not exclusively, to a method of providing a slide show, in which interactive information of the slide show is further included into a multimedia object transfer (MOT) packet, so that a user can interactively control the slide show displayed on a DAB receiver, an apparatus to process the slide show, and the DAB receiver.

Digital Audio Broadcasting (DAB) is multimedia broadcasting that allows transmission of multi-channel audio made of high-quality digital data, various additional data, still images, video images, and graphics data. Through DAB, it is possible to provide multimedia services, such as travel and traffic information service, a program linkage information service that provides a news image combined with headline characters or weather forecast and traffic information combined with electronic maps, enhanced services such as web site broadcasting or global positioning system (GPS) service for the DAB, and a moving image service.

A slide show is one type of multimedia service. In the slide show, images are transmitted, to and sequentially displayed on, a DAB receiver according to a multimedia object transmission (MOT) protocol. The slide show provides information regarding characters or images related to received audio. A conventional slide show simply displays contents provided by a service provider, but does not allow a user to change an instant of time when the respective contents of the slide show are displayed or a position of the contents displayed. In other words, in the case of the conventional slide show, a MOT packet contains only information regarding the slide show, such as ContentsName information regarding the name of a slide show image, and TriggerTime information regarding an instant of time when the slide show image is displayed. Accordingly, a user is not allowed to manipulate an image displayed on a screen. For example, it is impossible to change a position or size of the image.

The present invention provides a method of providing a slide show, in which interactive information is further included into the slide show using an MPEG-4 system binary format for scene (BIFS), an apparatus for processing the slide show, and a digital audio broadcasting (DAB) receiver with the apparatus.

According to one aspect of the present invention, there is provided a method of displaying a slide show, the method including receiving slide show data having interactive data, parsing the received interactive data and outputting data regarding a screen display of the slide show based on a result of the parsing; and receiving the data regarding the screen display and displaying the data regarding the screen display.

The method may further include when a user input is input, receiving the user input using the interactive data, outputting data regarding the screen display in accordance with the received user input, and displaying the data regarding the screen display.

The interactive data may include a data field in which information regarding a constitution of a screen display of the slide show is stored, and a toggle bit available to determine whether parsing of the data field is required.

The information regarding the constitution of the screen display stored in the data field may be recorded in a virtual reality modeling language.

According to another aspect of the present invention, there is provided an apparatus for processing a slide show, the apparatus including a data receiver receiving data regarding the slide show, the data including interactive data, a parser parsing a header core and a header extension field included in the received data regarding the slide show, the interactive data being included in the header extension field, a controller controlling a screen constitution unit based on the result of parsing the interactive data, and the screen constitution unit outputting data regarding a screen display and displaying the data regarding the screen display based on the result of parsing the interactive data.

The apparatus may further include a user interface unit receiving a command input by a user.

The screen constitution unit may output the data regarding the screen display and display the data according to at least one of a result of parsing BIFS (binary format for scene) data, or a user input.

According to yet another aspect of the present invention, there is provided an apparatus for receiving digital audio broadcasting, the apparatus including a data receiver receiving data regarding the digital audio broadcasting, the data including interactive data, a parser parsing a header core and a header extension field included in the received data regarding the digital audio broadcasting, the interactive data being included in the header extension field, a controller controlling a screen constitution unit based on the result of parsing the interactive data, the screen constitution unit outputting data regarding a screen display and displaying the data regarding the screen display based on the result of parsing the interactive data, and a user interface unit receiving a command from a user, to interact with the digital audio broadcasting.

According to still another aspect of the present invention, there is provided an information storage medium in which data regarding a digital audio broadcasting slide show is stored, the information storage medium including a data field in which interactive data regarding a constitution of a screen display of the slide show is stored, and a toggle bit to determine whether parsing of the data field is required.

According to a further aspect of the present invention, there is provided a method of providing a slide show, comprising: receiving, according to a multimedia object transmission (MOT) protocol, an MOT packet including data regarding a slide show, and parsing a header core of the MOT packet; parsing a header extension field of the MOT packet to obtain ContentsName and TriggerTime information about the slide show, and storing the obtained information in a display buffer; if a toggle bit included in interactive data stored in the header extension field is greater than a predetermined value, parsing a binary format for scene (BIFS) field and outputting data regarding a screen display based on a result of the parsing of the BIFS field; displaying the data regarding the screen display; and modifying a constitution of the displayed data regarding the screen display in accordance with a user input received via a sensor node.

According to a further aspect of the present invention, there is provided a computer readable medium encoded with processing instructions for implementing a method of method of providing a slide show performed by a computer, the method comprising: a first set of instructions to receive, according to a multimedia object transmission (MOT) protocol, an MOT packet including data regarding a slide show, and parse a header core of the MOT packet; a second set of instructions to parse a header extension field of the MOT packet to obtain ContentsName and TriggerTime information about the slide show, and store the obtained information in a display buffer; a third set of instructions to parse a binary format for scene (BIFS) field and output data regarding a screen display based on a result of the parsing of the BIFS field if a toggle bit included in interactive data stored in the header extension field is greater than a predetermined value; a fourth set of instructions to display the data regarding the screen display; and a fifth set of instructions to modify a constitution of the displayed data regarding the screen display in accordance with a user input received via a sensor node.

According to a further aspect of the present invention, there is provided a method of displaying a slide show, comprising: inserting interactive data regarding the slide show into a multimedia object transfer (MOT) packet so that a user can interactively control the slide show displayed on a digital audio broadcasting (DAB) receiver.

For a better understanding of the invention, and to show how embodiments of the same may be carried into effect, reference will now be made, by way of example, to the accompanying diagrammatic drawings in which:
FIG. 1 illustrates a multimedia object transfer (MOT) protocol according to an embodiment of the present invention;
FIG. 2 illustrates a data structure of a MOT packet according to an embodiment of the present invention;
FIG. 3 illustrates a data structure of ContentsName information;
FIG. 4 illustrates a data structure of TriggerTime information;
FIG. 5 illustrates a structure of interactive data according to an embodiment of the present invention;
FIG. 6 is a flowchart of a method of displaying a slide show according to interactive data according to an embodiment of the present invention; and
FIG. 7 is a block diagram of an apparatus to process a slide show according to an embodiment of the present invention.

Reference will now be made in detail to embodiments of the present invention, examples of which are illustrated in the accompanying drawings, wherein like reference numerals refer to the like elements throughout. The embodiments described below explain the present invention by referring to the figures.

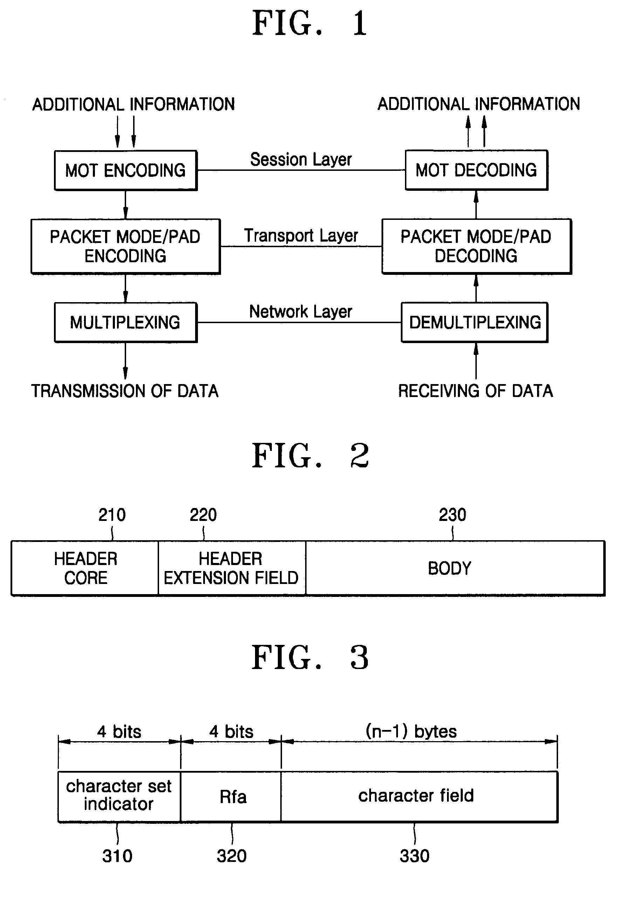

FIG. 1 is a diagram illustrating a multimedia object transfer (MOT) protocol. Digital audio broadcasting (DAB) provides various multimedia services, including audio services. Data regarding such a multimedia service is transmitted according to the MOT protocol. An object of the multimedia service data is divided into several MOT packets. Each of the MOT packets is segmented into predetermined pieces and transmitted to a transport layer via a main service channel (MSC). In the transport layer, data in the MOT packets transmitted via the MSC are classified into two groups: one group that will be transmitted as packet data and the other group that will be included into a sub field in Program Associated Data (PAD). The classified two groups are stored in a channel of an ensemble. In a network layer, packet data in such channels are constructed and transmitted as ensembles.

FIG. 2 illustrates a data structure of a MOT packet according to an embodiment of the present invention. The MOT packet of FIG. 2 includes a header core field 210, a header extension field 220, and a body field 230.

The header core field 210 is 7 bytes long, and stores information regarding lengths of the header core field 210 and the header extension field 220, and information regarding a type of a multimedia object stored in the body field 230. For instance, the information regarding the type of a multimedia object indicates whether an image type of the multimedia object is JPEG or GIF. The header extension field 220 has a variable length, and provides information regarding the multimedia object included in the body field 230, such as ContentsName information that specifies a content name of the multimedia object, TriggerTime information regarding an instant of time when the multimedia object is output, and interactive data that can be exchanged interactively between the header extension field 220 and a user. Binary Format for Scene (BIFS) data is a type of the interactive data. The BIFS data will be described in detail later.

FIG. 3 illustrates a data structure of the ContentsName information. Referring to FIG. 3, the ContentsName information includes a 4-bit character set indicator 310 indicating whether a character included in a character field 330 is Korean or English, a reserved for additional (Rfa) field 320 that remains blank for future use, and the character field 330 of (n-1) bytes. If the name of an image file containing images is aaa.jpg, "aaa" is stored in the character field 330.

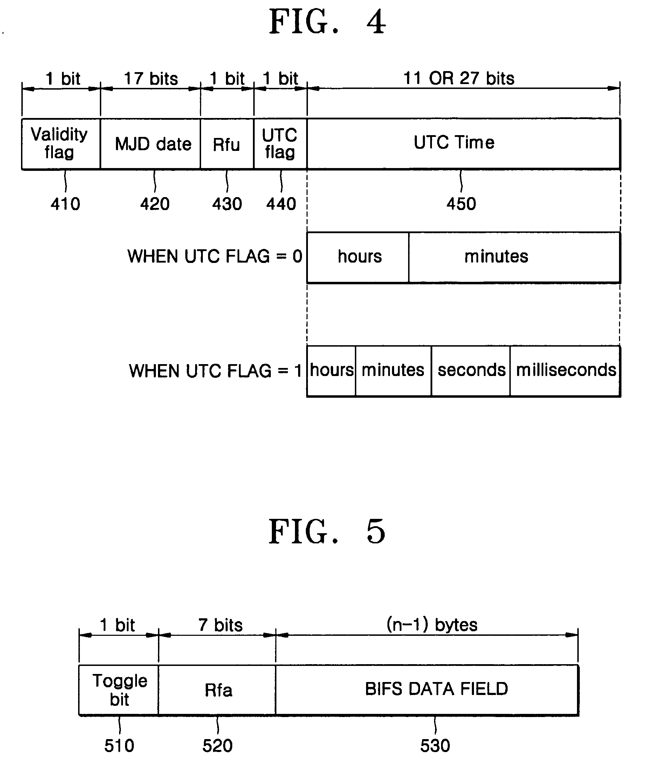

FIG. 4 illustrates a data structure of the TriggerTime information. Referring to FIG. 4, in a validity flag field 410, whether time information included in the TriggerTime information is valid is represented with 1 bit. In a Modified Julian Date (MJD) data field 420, a date when a multimedia object is displayed is represented with 17 bits. A 1-bit Rfu field 430 remains blank for future use. A 1-bit UTC (Coordinated Universal time) flag field 440 specifies the type of a UTC time field 450. The length and contents of the UTC time field 450 vary depending on the value of the UTC flag field 440.

When the UTC flag field 440 has a value of 0, the UTC time field 450 is 11 bits long, that is,the UTC time field 450 has 5 bits specifying the hour when the multimedia object is output, and 6 bits specifying the minute when the multimedia object is output. When the UTC flag field 440 has a value of 1, the UTC time field 450 is 27 bits long, i.e., the UTC time field 450 has 5 bits, 6 bits, 6 bits, and 10 bits that specify the hour, minute, second, and millisecond when the multimedia object is output, respectively. Accordingly, an analysis of the TriggerTime information reveals when an object included in the body field 230 must be displayed.

FIG. 5 illustrates a structure of the interactive data according to an embodiment of the present invention. The interactive data of FIG. 5 includes a toggle bit field 510, an Rfa field 520, and a BIFS data field 530. The toggle bit field 510 has information indicating whether parsing of the BIFS data field 530 is required. If there is no change in a screen display, parsing of the BIFS data field 530 is not required. In this case, a value of the toggle bit field 510 is set to 0. When there is a change in the screen display and parsing of the BIFS data field 530 is required, the value of the toggle bit field 510 is set to 1, the BIFS data field 530 is parsed, and the screen display is reconstructed (constituted) based on a result of the parsing. That is, whenever receiving a MOT packet, the toggle bit field 510 is referred to, and the BIFS data field 530 is not parsed when the toggle bit is set to 0. The Rfa field 520 is 7 bits long and is reserved for future use.

The BIFS data field 530 has BIFS data related to screen display. A BIFS denotes a description of a screen display constitution. The BIFS is an extension of virtual reality modeling language (VRML) that describes a virtual reality in an Internet virtual space. The BIFS allows objects, which are encoded with natural or synthetic voice or images, to be arranged in a virtual time-space, and describes an interaction between a user and a system so that the user can manipulate the objects. Next, data regarding the screen display is converted into binary data to compress data regarding representation of scenes.

The BIFS uses various nodes to constitute a screen display. It is possible to change a size or position of a screen display according to a user input. In other words, use of the BIFS allows an interaction between the user and a system. A sensor node is one type of node that allows an interaction between the user and the system in the BIFS. For instance, it is possible to change objects displayed on a screen using a TimeSensor node according to a time sequence. An example of node interface related to the TimeSensor node is as follows:

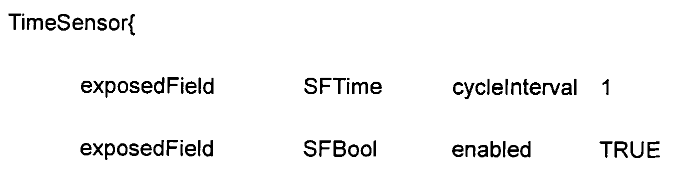

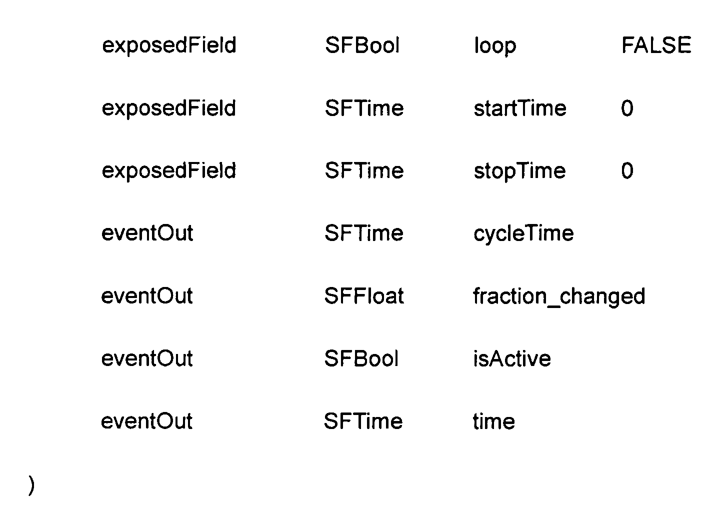

Also, it is possible to adjust the position or size of an object according to a user input, using an InputSensor node. An example of node interface related to a TouchSensor node is as follows:

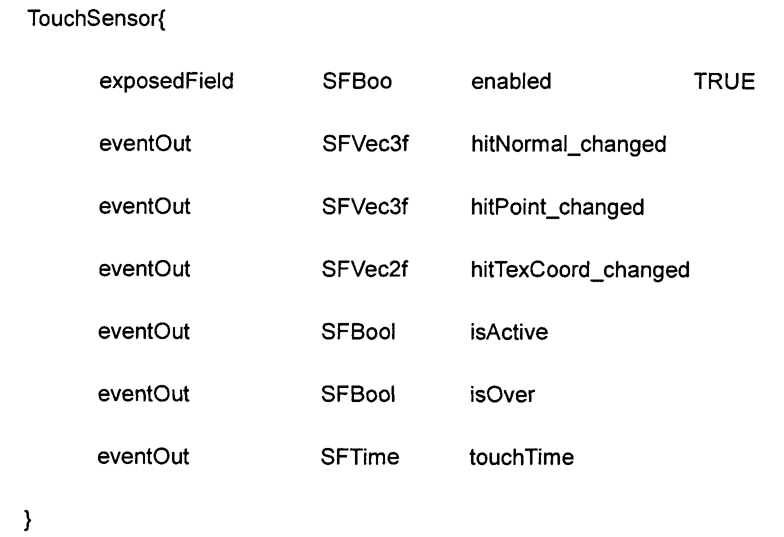

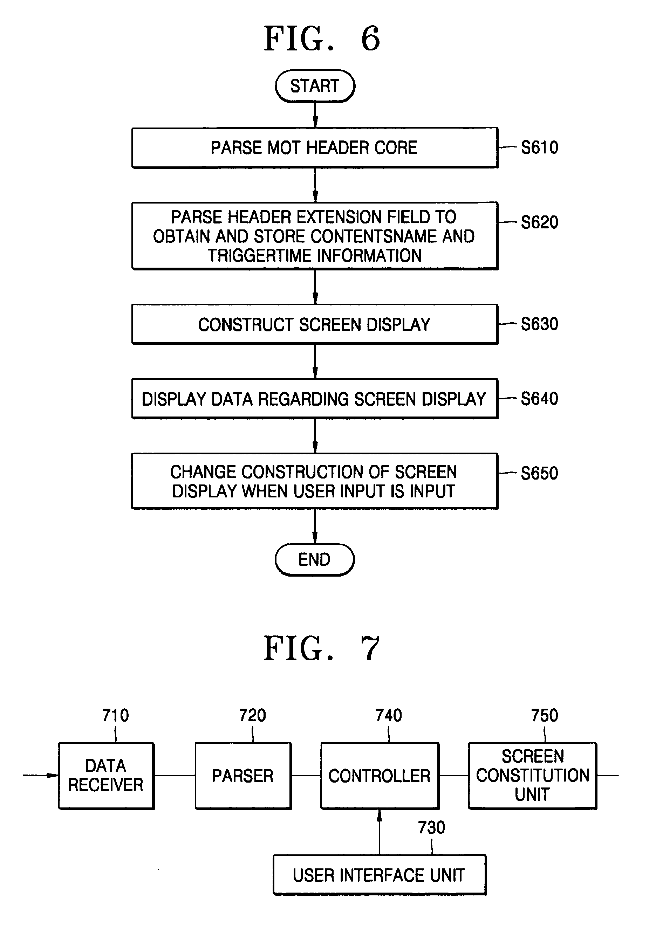

FIG. 6 is a flowchart of a method of displaying a slide show according to interactive data according to an embodiment of the present invention. Referring to FIG. 6, when a MOT packet including data regarding a slide show is received according to a MOT protocol, a MOT header core field of the MOT packet is parsed (Operation S610). Next, a header extension field is parsed to obtain ContentsName and TriggerTime information about the data regarding the slide show, and these are stored in a display buffer (Operation S620).

Next, a toggle bit contained in interactive data stored in the header extension field is parsed, it is determined that there is a change in a screen display when a value of the toggle bit field is set to 1, a BIFS data field is parsed, and data regarding the screen display is output based on the result of parsing (Operation S630). Then, the data regarding the screen display is displayed on a screen (Operation S640).

Finally, when a user input is received using a sensor node, constitution of the screen display is changed according to the user input (Operation S650). The user input may be received, for example, via a mouse, a keyboard, voice, or a touch screen. For instance, a user may increase or reduce the size of an image by clicking the mouse, or change the position of the image displayed on the screen by dragging a mouse pointer. Information regarding change of the size or position of the image using the mouse is stored as BIFS data, related to the above sensor node.

FIG. 7 is a block diagram of an apparatus to process a slide show according to an embodiment of the present invention. The apparatus of FIG. 7 includes a data receiver 710, a parser 720, a user interface unit 730, a controller 740, and a screen constitution unit 750.

The data receiver 710 receives a MOT packet containing data regarding a slide show according to a MOT protocol. The parser 720 parses a header core field and a header extension field of the received data, parses BIFS data stored in the header extension field according to a toggle bit of the BIFS data included in the header extension field, and provides the results of parsing to the screen constitution unit 750. The user interface unit 730 receives a command from a user, for example, via a keyboard, a mouse, or a touch screen, and sends the command to the controller 740. The controller 740 controls the screen construction unit 750 in accordance with the received command. The screen construction unit 750 outputs data regarding a screen display according to the result of parsing the BIFS data and/or a user input, and displays the data.

A method of displaying a slide show according to the present invention may be realized as a computer program. Code and code segments of the program are easily derivable by a computer programmer in a technical field to which the present invention belongs. The program may be stored in a computer readable media. The program is read and executed by a computer to realize this method. The computer readable media may be any medium such as a magnetic recording medium, an optical recording medium, and a carrier wave.

As described above, according to the present invention, it is possible to provide a user with an interactive slide show service that allows an interaction between the user and a system using a user interface.

Although a few embodiments of the present invention have been shown and described, it would be appreciated by those skilled in the art that changes may be made in this embodiment without departing from the principles and spirit of the invention, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of displaying a slide show, comprising:
(a) receiving slide show data having interactive data;
(b) parsing the received interactive data and outputting data regarding a screen display of the slide show based on a result of the parsing; and
(c) receiving the data regarding the screen display and displaying (S640) the data regarding the screen display.

2. The method of claim 1, further comprising:
(d) when a user input is input, receiving the user input using the interactive data, outputting data regarding the screen display in accordance with the received user input, and displaying the data regarding the screen display (S650).

3. The method of claim 1 or 2, wherein the interactive data comprises:
a data field (530) in which information regarding a constitution of a screen display of the slide show is stored; and
a toggle bit (510) available to determine whether parsing of the data field is required.

4. The method of claim 3, wherein the information regarding the structure of the screen display stored in the data field is recorded in a virtual reality modeling language.

5. The method of claim 3, wherein the information regarding the constitution of the screen display stored in the data field is BIFS (binary format for scene) data.

6. An apparatus for processing a slide show, comprising:
a data receiver (710) for receiving data regarding the slide show, the data including interactive data;
a parser (720) for parsing a header core (210) and a header extension field (220) included in the received data regarding the slide show, the interactive data being included in the header extension field;
a controller (740) for controlling a screen constitution (750) unit based on the result of parsing the interactive data; and
the screen constitution unit (750) being operable to output data regarding a screen display and to display the data regarding the screen display based on the result of parsing the interactive data.

7. The apparatus of claim 6, further comprising a user interface unit (730) for receiving a command input by a user.

8. The apparatus of claim 6 or 7, wherein the data receiver (710) is operable to receive the data regarding the slide show according to a multimedia object transfer protocol.

9. The apparatus of any of claims 6-8, wherein the screen constitution unit (750) is operable to output the data regarding the screen display and to display the data according to at least one of a result of parsing BIFS (binary format for scene) data, or a user input.

10. The apparatus of any of claims 7-9, wherein when the command is input, the screen constitution unit (750) is operable to receive the command using the interactive data, to output the data regarding the screen display, and to display the data.

11. The apparatus of any of claims 6-10, wherein the interactive data comprises:
a data field (530) in which information regarding the screen display of the slide show is stored; and
a toggle bit (510) to determine whether parsing of the data field is required.

12. The apparatus of claim 11, wherein the information regarding the screen display stored in the data field is recorded in a virtual reality modeling language.

13. The apparatus of claim 11, wherein the information regarding the structure of the screen display stored in the data field is BIFS (binary format for scene) data.

14. An apparatus for receiving digital audio broadcasting, comprising:
a data receiver (710) for receiving data regarding the digital audio broadcasting, the data including interactive data;
a parser (720) for parsing a header core (210) and a header extension field (220) included in the received data regarding the digital audio broadcasting, the interactive data being included in the header extension field;
a controller (740) for controlling a screen constitution unit (750) based on the result of parsing the interactive data;
the screen constitution unit (750) being operable to output data regarding a screen display and to display the data regarding the screen display based on the result of parsing the interactive data; and
a user interface unit (730) for receiving a command from a user, to interact with the digital audio broadcasting.

15. The apparatus of claim 14, wherein the interactive data is BIFS (binary format for scene) data.

16. An information storage medium in which data regarding a digital audio broadcasting slide show is stored, comprising:
a data field (530) in which interactive data regarding a constitution of a screen display of the slide show is stored; and
a toggle bit (510) to determine whether parsing of the data field is required.

17. The information storage medium of claim 16, wherein the interactive data is recorded in a virtual reality modeling language.

18. The information storage medium of claim 16, wherein the interactive data is BIFS (binary format for scene) data.

19. A method of providing a slide show, comprising:
receiving, according to a multimedia object transmission (MOT) protocol, an MOT packet including data regarding a slide show, and parsing (S610) a header core (210) of the MOT packet;
parsing (S620) a header extension field (220) of the MOT packet to obtain ContentsName and TriggerTime information about the slide show, and storing the obtained information in a display buffer;
if a toggle bit (510) included in interactive data stored in the header extension field (220) is greater than a predetermined value, parsing a binary format for scene (BIFS) field and outputting data regarding a screen display based on a result of the parsing of the BIFS field;
displaying (S640) the data regarding the screen display; and
modifying (S650) a constitution of the displayed data regarding the screen display in accordance with a user input received via a sensor node.

20. A computer readable medium encoded with processing instructions for implementing a method of method of providing a slide show performed by a computer, the method comprising:
a first set of instructions to receive, according to a multimedia object transmission (MOT) protocol, an MOT packet including data regarding a slide show, and parse (S610) a header core of the MOT packet;
a second set of instructions to parse (S620) a header extension field of the MOT packet to obtain ContentsName and TriggerTime information about the slide show, and store the obtained information in a display buffer;
a third set of instructions to parse a binary format for scene (BIFS) field and output data regarding a screen display based on a result of the parsing of the BIFS field if a toggle bit included in interactive data stored in the header extension field is greater than a predetermined value;
a fourth set of instructions to display (S640) the data regarding the screen display; and
a fifth set of instructions to modify (S650) a constitution of the displayed data regarding the screen display in accordance with a user input received via a sensor node.

21. A method of displaying a slide show, comprising:
inserting interactive data regarding the slide show into a multimedia object transfer (MOT) packet so that a user can interactively control the slide show displayed on a digital audio broadcasting (DAB) receiver.
